# EUROPÄISCHE PATENTSCHRIFT

(11) **EP 0 602 314 B1**
(45) Veröffentlichungstag und Bekanntmachung des Hinweises auf die Patenterteilung: **03.01.1996**
(21) Anmeldenummer: 93112301.2
(22) Anmeldetag: 30.07.1993
(51) Int. Cl.: F16B 37/04

(54) **Anordnung zur federelastischen Lagesicherung von Befestigungsmitteln in Ausnehmungen**
Device for securing fastening elements in seatings by the elasticity of springs
Dispositif pour assurer le maintien en place d'éléments de fixation dans des logements au moyen de l'élasticité de ressorts

(30) Priorität: 18.12.1992 DE 9217377 U
(43) Veröffentlichungstag der Anmeldung: 22.06.1994
(73) Patentinhaber: Knürr Mechanik für die Elektronik AG, D-81829 München (DE)
(72) Erfinder: Flamme, Hans, D-82008 Unterhaching (DE)
(74) Vertreter: Heim, Hans-Karl, Dipl.-Ing.

(56) Entgegenhaltungen:
- DE-U- 9 217 377
- FR-A- 2 426 824
- FR-E- 96 603

## Beschreibung

Die Erfindung betrifft eine Anordnung zur federelastischen Lagesicherung von Befestigungsmitteln in Ausnehmungen gemäß dem Oberbegriff des Anspruchs 1.

Zum Aufbau modularer Arbeitsplatzeinheiten mit technischen und Elektronik-Schränken, Arbeitspulten und -tischen, Gehäusen und Baugruppeneinheiten werden Horizontal- und Vertikalprofile mit Ausnehmungen, insbesondere mit T-Nuten, verwendet, in denen zur schraubbaren Befestigung von Bauteilen Muttern angeordnet werden.

Aus der DE 26 35 439 C2 ist eine Federmutter mit einer Platte und einem bogenförmigen Federsteg bekannt, die durch einen Schlitz einer T-Nut eingeführt und nach einer Verdrehung um 90 Grad in der Nut plaziert werden kann. Diese Federmutter kann infolge der Wirkung des Federstegs in einer langgestreckten T-Nut verschoben und an einer vorgebbaren Stelle zur Befestigung von Modulschienen, Scharnieren und dergleichen gehalten werden.

Aus der DE 9207805 U1 ist eine Anordnung bekannt, bei welcher eine Ausnehmung, insbesondere eine T-Nut, einen Seitenschenkel mit einem in Längsrichtung ausgebildeten Lochraster aufweist, in welcher eine Federmutter mit einem einrastbaren Federsteg gehalten ist. Eine stabile Lagesicherung wird durch ein am Federsteg ausgebildetes Rastelement, beispielsweise eine Rasternoppe, erreicht, die in das Lochraster einrastet.

Für eine sichere Lagefixierung ist bei der bekanntenn Anordnung die Ausbildung von Sicherungsbereichen in einer Ausnehmung erforderlich. Ausnehmungen, welche glatte und durchgehende Wandungen aufweisen, gewährleisten nicht in jedem Fall eine Selbsthemmung und eine sichere Lagefixierung des Befestigungsmittels.

Der Erfindung liegt die **Aufgabe** zugrunde, eine Anordnung zu schaffen, die besonders einfach ist und auch bei glatten, durchgehenden Ausnehmungen eine sichere Lagefixierung eines Befestigungsmittels, insbesondere einer in einer T-Nut verschiebbaren Federmutter, ermöglicht.

Erfindungsgemäß wird die Aufgabe durch die kennzeichnenden Merkmale des Anspruchs 1 gelöst. Vorteilhafte und zweckmäßige Ausgestaltungen sind in den Unteransprüchen und in der Figurenbeschreibung aufgenommen.

Der Erfindung liegt die Überlegung zugrunde, ein zusätzliches Mittel zur Lagesicherung eines Befestigungselementes, insbesondere einer Federmutter in einer Ausnehmung, bevorzugt in einer T-Nut, lösbar anzuordnen, wobei dieses zusätzliche Mittel bevorzugt über die schlitzförmige Nutöffnung einführbar ist und durch seine Gestaltung und Materialeigenschaften die federelastische Lagesicherung des Befestigungsmittels gewährleistet.

Erfindungsgemäß wird in einer Ausnehmung ein Flachmaterial angeordnet, welches Sicherungsbereiche zur federelastischen Aufnahme der Befestigungsmittel aufweist. Dieses Flachmaterial, welches sich über die gesamte Länge einer T-nutförmigen Ausnehmung oder lediglich über Teilbereiche erstrecken kann, ist in einer vorteilhaften Weise über die schlitzförmige Öffnung der T-Nut einführbar und bodenseitig fixierbar.

Ein wesentlicher Grundgedanke der Erfindung besteht darin, eine Ausnehmung fakultativ für die federelastische Aufnahme von wenigstens einem Befestigungsmittel auszubilden. Das bedeutet, daß die Ausnehmung selbst unverändert ausgebildet ist und zusätzlich ein Mittel in diese Ausnehmung eingeführt und darin angeordnet wird. Gemäß der Erfindung ist das zusätzliche Mittel ein Flachmaterial, welches bei Bedarf in eine Ausnehmung eingeführt wird. Indem dieses Flachmaterial mit den Sicherungsbereichen, beispielsweise mit einem Lochraster oder auch mit Rasternoppen versehen ist, können entsprechend ausgebildete Befestigungsmittel, insbesondere Federmuttern mit komplementär ausgebildeten Federschenkeln, an dem zusätzlich in der Ausnehmung angeordneten Flachmaterial lagefixiert werden

. Zweckmäßigerweise wird eine streifen- oder leistenförmige Schiene als Flachmaterial eingesetzt, die auf dem Boden der Nut aufliegt und bevorzugt über Klemmelemente, beispielsweise über seitlich angeordnete Klemmspitzen, lösbar fixiert ist. Als Sicherungsbereiche sind bei dieser Schiene noppenartige Ausformungen, beispielsweise stanzmäßig durch Schnitt oder durch Tiefziehen, ausgebildet. Auf diese Ausformungen, die den Rasternoppen einer einrastbaren Federmutter vergleichbar sind, können Federmuttern mit einem Federsteg aufgeklipst werden, wenn im Bereich des beispielsweise bogenförmigen Federstegs komplementäre Bohrungen ausgebildet sind.

Die noppenartigen Ausformungen der Metallschiene sind rasterartig angeordnet, wobei das Rastermaß den Abmessungen der zu sichernden Federmuttern oder anderer Befestigungselemente angepaßt ist.

Zur selbsttätigen und lösbaren Halterung der Metallschiene im Klemmsitz sind die Klemmelemente an den längsseitigen Kanten der Metallschiene federnd und gegebenenfalls keilartig ausgebildet, wodurch eine vorteilhafte Verstellung in einer Richtung gegeben ist. Eine derartige Verstellung ist im Zusammenhang mit einer exakten, übereinstimmenden Höheneinstellung von in mehreren T-nutförmigen Ausnehmungen bzw. Profilen angeordneten Befestigungsmitteln gegebenenfalls erforderlich, wobei ein Ausrichten mehrerer als Flachmaterial eingesetzter Schienen beispielsweise am Ende eines Hohlprofils erfolgen kann. Ein Längsverschieben der Schienen innerhalb einer T-Nut ermöglicht in einem begrenzten Umfang einen Ausgleich von Fertigungstoleranzen, beispielsweise der einzubauenden Teile.

In einer Ausgestaltung der Erfindung kann das Flachmaterial ein gewölbtes oder bogenförmiges Federblech sein, dessen Wölbung im eingelegten Zustand zur schlitzförmigen Nutöffnung weist, und das zweckmäßigerweise mit den Längskanten in den vom Nutboden und den Seitenschenkeln gebildeten Eckbereichen eingeklemmt und abgestützt ist.

Als Sicherungsbereiche für eine bevorzugt einzusetzende einrastbare Federmutter sind mittige Ausstanzungen rasterartig ausgebildet, die analog zu den noppenartigen Ausformungen des schienenförmigen Metallstreifens eine stufenweise Lagesicherung und Verstellung der Federmutter ermöglichen.

Zur sicheren und leicht lösbaren Halterung sind die Ausstanzungen komplementär zu den Rasternoppen am Federsteg der Federmutter ausgebildet. Als Material für eine derartige federelastische Schiene eignen sich Metalle mit sehr guten Federeigenschaften, beispielsweise Berylliumnickel, Berylliumkupfer, Federmessing und auch rostfreier Stahl.

In einer Weiterbildung der Erfindung ist als Flachmaterial ein elastomerer Kunststoffstreifen eingesetzt, der zur Aufnahme des Federstegs oder einer Rasternoppe am Federsteg einer Federmutter Ausstanzungen, beispielsweise rechteckige, quadratische oder auch bogenförmige Ausstanzungen im Bereich der Seitenkanten aufweist. Ein derartig ausgebildetes Flachmaterial ermöglicht eine stufenweise Lagefixierung eines Befestigungsmittels in einer T-nutförmigen Ausnehmung.

In einer Weiterbildung wird eine stufenlose Lagesicherung durch einen in der Ausnehmung fixierbaren Kunststoffstreifen ermöglicht, der wenigstens in den zur Aufnahme von Befestigungsmitteln vorgesehenen Sicherungsbereichen aus einem hochelastischen Kunststoff besteht. In einer besonders einfachen und zweckmäßigen Ausbildung ist der Kunststoffstreifen in der Art eines Dichtungsmaterials in der T-Nut angeordnet, beispielsweise lösbar eingeklemmt oder auch eingeklebt und somit fest angeordnet. Eine federelastische Aufnahme eines Befestigungsmittels, beispielsweise auch einer Schraubenmutter ohne Federsteg, ist gewährleistet, wenn der Kunststoffstreifen eine geeignete Elastizität und Stärke aufweist.

Als vorteilhaft können sich Kunststoffstreifen mit einer aufgerauhten Oberfläche erweisen.

Die Erfindung wird nachstehend anhand einer Zeichnung weiter beschrieben; in dieser zeigen in einer stark schematisierten Weise:
Fig. 1 eine perspektivische Darstellung einer erfindungsgemäßen Anordnung für eine T-nutförmige Ausnehmung;
Fig. 2 eine zweite Ausführungsform der erfindungsgemäßen Anordnung;
Fig. 3 ein mit Sicherungsbereichen versehenes Federblech als Flachmaterial der Ausführungsform gem. Fig. 2 und
Fig. 4 einen elastischen Kunststoffstreifen mit seitlichen Aussparungen als weiteres Flachmaterial für eine erfindungsgemäße Anordnung.

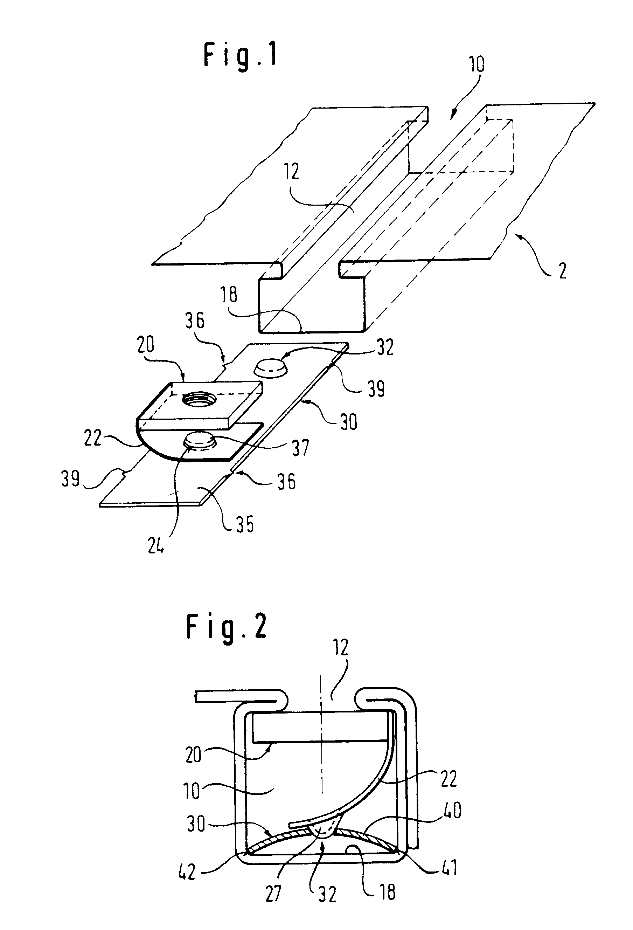

In Fig. 1 ist als Ausschnitt ein Bereich eines Hohlprofils 2 mit einer T-nutförmigen Ausnehmung 10 gezeigt, in welche Federmuttern 20 als Befestigungsmittel lageverschiebbar und lagegesichert angeordnet werden. Im Ausführungsbeispiel ist zur besseren Übersicht ein zur federelastischen Lagesicherung der Federmutter 20 vorgesehenes Flachmaterial 30 außerhalb der T-Nut 10 angeordnet. Zweckmäßigerweise wird das Flachmaterial, beispielsweise die in Fig. 1 dargestellte Metallschiene 30 über eine schlitzförmige Nutöffnung 12 in die T-Nut 10 eingelegt und auf dem Boden 18 festgeklemmt. Zu diesem Zweck sind an der Schiene 30, die als ein dünner Metallstreifen 35 ausgebildet sein kann, kleine Klemmspitzen 39 als seitlich abstehende Klemmelemente 36 ausgebildet. Im dargestellten Beispiel weisen die Klemmspitzen 39 die Form eines gleichseitigen Dreiecks auf.

Im Bereich der Längsachse des Metallstreifens 35 sind noppenartige Ausformungen 37 als Sicherungsbereiche rasterförmig ausgebildet, auf die die Federmutter 20 mit einer Bohrung 24 in einem Federsteg 22 aufgesteckt werden kann. Der Abstand zwischen den noppenartigen Ausformungen 37 und somit das Rastermaß ist den Abmessungen der Federmuttern 20 angepaßt, so daß diese unbehindert eingeführt, verdreht und gesichert werden können.

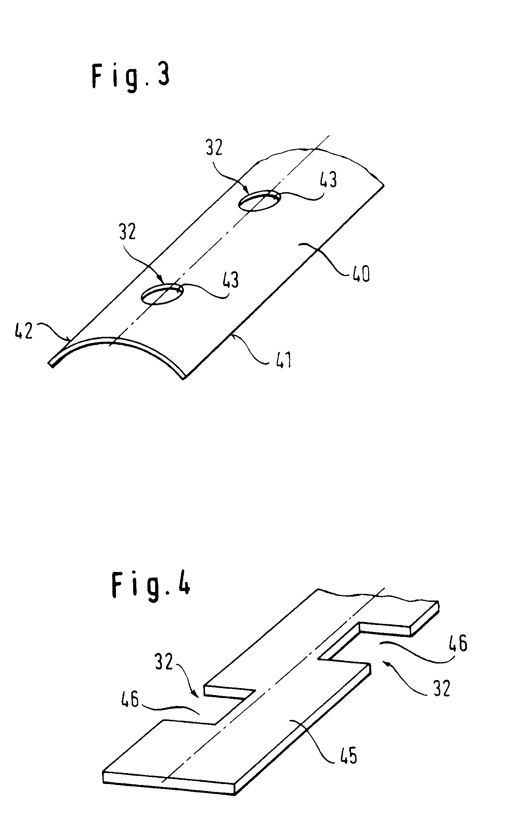

In Fig. 2 und 3 ist eine zweite Ausführungsform der erfindungsgemäßen Anordnung dargestellt, bei der als Flachmaterial 30 ein elastisches Federblech 40 eine federelastische Aufnahme für ein Befestigungsmittel 20 darstellt. In diesem Ausführungsbeispiel sind somit sowohl das Befestigungsmittel 20, eine Federmutter mit Federsteg 22, als auch das Flachmaterial 30, ein Federblech 40, federelastisch ausgebildet. Das Federblech 40 ist mit Ausstanzungen 43 versehen, die komplementär zu Rastelementen 27 am Federsteg 22 der Federmutter 20 ausgebildet sind. Aus Fig. 2 ist erkennbar, daß diese erfindungsgemäße Anordnung eine besonders sichere Lagefixierung eines Befestigungsmittels 20 gewährleistet. Das gewölbte Federblech 40 ist über Längskanten 41,42 auf dem Nutboden 18 abgestützt und eingeklemmt.

Als weitere alternative Ausbildung für ein Flachmaterial 30 ist in Fig. 4 ein elastischer Kunststoffstreifen 45 in schematischer Weise dargestellt. Als Sicherungsbereiche 32 dienen nahezu quadratische Ausstanzungen 46, die gleichzeitig das Einführen und Fixieren des Kunststoffstreifens in einer Ausnehmung erleichtern.

## Patentansprüche

1. Anordung mit wenigstens einem Befestigungsmittel (20) in einer nutförmigen Ausnehmung (10), in welcher das Befestigungsmittel (20) federelastisch in Sicherungsbereichen (32) gehalten ist,
dadurch **gekennzeichnet**, daß ein Flachmaterial (30), welches in die Ausnehmung (10) einführbar ist und die Sicherungsbereiche (32) zur federelastischen Aufnahme des Befestigungmittels (20) aufweist, in der Ausnehmung (10) angeordnet ist.

2. Anordnung nach Anspruch 1, dadurch **gekennzeichnet**, daß als Flachmaterial eine Schiene (30) in eine T-Nut (10) eines Hohlprofils (2) einlegbar und bodenseitig fixierbar ist und daß eine Federmutter (20) als Befestigungsmittel in der T-Nut (10) verstellbar ist.

3. Anordnung nach Anspruch 2, dadurch **gekennzeichnet**, daß die Schiene (30) im Klemmsitz in der T-Nut (10) angeordnet ist und daß die Sicherungsbereiche (32), die rasterartig ausgebildet sind, wenigstens einen Bereich eines Federstegs (22) der Federmutter (20) aufnehmen.

4. Anordnung nach Anspruch 2 oder 3, dadurch **gekennzeichnet**, daß die Schiene (30) ein Metallstreifen (35) mit seitlich angeordneten Klemmelementen (36) ist und daß der Metallstreifen (35) zur stufenmäßigen Lagesicherung der Federmutter (20) noppenartige Ausformungen (37) aufweist, auf welche die Federmutter (20) über eine Federstegbohrung (24) aufklipsbar ist.

5. Anordnung nach Anspruch 4, dadurch **gekennzeichnet**, daß als Klemmelemente (36) gleichmäßig beabstandete Klemmspitzen (39) ausgebildet sind, in deren Bereich die Breite der Schiene (30) geringfügig größer als die der T-Nut (10) ist.

6. Anordnung nach Anspruch 5, dadurch **gekennzeichnet**, daß die Klemmspitzen (39) federnd und keilförmig ausgebildet sind.

7. Anordnung nach Anspruch 2, dadurch **gekennzeichnet**, daß das Flachmaterial ein gewölbtes, über Längskanten (41, 42) in der T-Nut (10) festklemmbares Federblech (40) ist, welches zur stufenmäßigen Lagesicherung der Federmutter (20) mit Ausstanzungen (43) versehen ist, die komplementär zu einem einrastbaren Federsteg (22) der Federmutter (20) ausgebildet sind.

8. Anordnung nach Anspruch 7, dadurch **gekennzeichnet**, daß die Ausstanzungen (43) nahezu mittig und zur Aufnahme von Rasternoppen (27) am Federsteg (22) der FeFedermutter(20) ausgebildet sind.

9. Anordnung nach Anspruch 2, dadurch **gekennzeichnet**, daß das Flachmaterial ein elastischer Kunststoffstreifen (45) ist, der seitliche Aussparungen (46) zur Aufnahme des Federstegs (22) der Federmutter (20) aufweist.

10. Anordnung nach Anspruch 2, dadurch **gekennzeichnet**, daß in der T-Nut (10) als Flachmaterial ein hochelastischer Kunststoffstreifen fixiert ist, der eine zur federelastischen Lagesicherung von Muttern als Befestigungsmittel geeignete Elastizität und Stärke aufweist.

## Claims

1. An arrangement with at least one fastening means (20) in a slot-shaped recess (10), into which the fastening means (20) is spring-elastic retained in locking areas (32), **characterized** in that a flat material (30), which is insertable in the recess (10) and provided with the locking areas (32) for a spring-elastic reception of the fastening means (20), is located in the recess (10).

2. An arrangement according to claim 1, **characterized** in that as flat material a rail (30) is insertable and fixable at the bottom of a T-slot (10) of a hollow profile (2), and that a spring nut (20) as a fastening means is adjustable in the T-slot (10).

3. An arrangement according to claim 2, **characterized** in that the rail (30) is arranged in force fit in the T-slot (10), and that the locking areas (32) formed in a grid-like pattern receive at least one area of a spring web (22) of the spring nut (20).

4. An arrangement according to claim 2 or 3, **characterized** in that the rail (30) is a metal strip (35) with laterally positioned clamping elements (36) and that for a stepped position fixing of the spring nut (20), the metal strip (35) has studlike shaped portions (37), onto which the spring nut (20) can be clipped by means of a spring web bore (24).

5. An arrangement according to claim 4, **characterize**d in that the clamping elements (36) are formed by uniformly spaced clamping tips (39), in whose vicinity the width of the rail (30) is slightly larger than that of the T-slot (10).

6. An arrangement according to claim 5, **characterized** in that the clamping tips (39) have a resilient, wedge-shaped construction.

7. An arrangement according to claim 2, **characterized** in that the flat material is a curved spring plate (40) fixable by means of longitudinal edges (41, 42) in the T-slot (10) and which for stepped position fixing of the spring nut (20) is provided with punched out portions (43), which are formed in complementary manner to a lockable spring web (22) of the spring nut (20).

8. An arrangement according to claim 7, **characterized** in that the punched out portions (43) are formed virtually centrally and for the reception of locking studs (27) on the spring web (22) of the spring nut (20).

9. An arrangement according to claim 2, **characterized** in that the flat material is an elastic plastic strip (45), which has lateral recesses (46) for the reception of the locking stud (22) of the spring nut (20).

10. An arrangement according to claim 2, **characterized** in that in the T-slot (10) is fixed as flat material a highly elastic plastic strip, which has a suitable elasticity and strength for a spring elastic position fixing of nuts as fastening means.

## Revendications

1. Dispositif comprenant au moins un moyen de fixation (20) dans un creux (10) en forme de rainure, dans lequel le moyen de fixation (20) est maintenu de manière élastique dans des zones d'arrêt (32), ***caractérisé en ce qu'*** un matériau plat (30), qui peut être introduit dans le creux (10) et présente les zones d'arrêt (32) destinées à recevoir de manière élastique le moyen de fixation (20), est placé dans le creux (10).

2. Dispositif selon la Revendication 1, ***caractérisé en ce que,*** comme matériau plat, une lame (30) peut s'insérer dans une rainure en T (10) d'un profilé creux (2) et y être fixée sur le fond, et ***en ce qu*** 'un écrou à ressort (20) est réglable en tant que moyen de fixation dans la rainure en T (10).

3. Dispositif selon la Revendication 2, ***caractérisé en ce que*** la lame (30) est placée en ajustement pressé dans la rainure en T (10) et ***en ce que*** les zones d'arrêt (32), qui sont formées à la manière de crans, accueillent au moins une zone d'une barrette à ressort (22) de l'écrou à ressort (20).

4. Dispositif selon la Revendication 2 ou 3, ***caractérisé en ce que*** la lame (30) est une bande métallique (35) avec des éléments de coinçage (36) placés sur les côtés, et ***en ce que*** la bande métallique (35) présente, pour immobiliser par paliers l'écrou à ressort (20), des moulures en forme de noppes (37) sur lesquelles se clipse l'écrou à ressort (20) par l'intermédiaire d'un perçage (24) de barrette à ressort.

5. Dispositif selon la Revendication 4, ***caractérisé en ce que,*** comme éléments de coinçage (36), des pointes de coinçage (39) régulièrement espacées sont formées, au niveau desquelles la largeur de la lame (30) est légèrement supérieure à celle de la rainure en T (10).

6. Dispositif selon la Revendication 5, ***caractérisé en ce que*** les pointes de coinçage (39) sont formées élastiques et en forme de cales.

7. Dispositif selon la Revendication 2, ***caractérisé en ce que*** le matériau plat est une tôle à ressort (40) courbée pouvant être immobilisée par serrage sur des bords longitudinaux (41, 42) dans la rainure en T (10), tôle qui, pour immobiliser par paliers l'écrou à ressort (20), est munie de découpes (43) qui sont formées complémentaires à une barrette à ressort encliquetable (22) de l'écrou à ressort (20).

8. Dispositif selon la Revendication 7, ***caractérisé en ce que*** les découpes (43) sont formées pratiquement en position médiane et pour recevoir des noppes de crantage (27) sur la barrette à ressort (22) de l'écrou à ressort (20).

9. Dispositif selon la Revendication 2, ***caractérisé en ce que*** le matériau plat est une bande de matière synthétique élastique (45) qui présente des évidements latéraux (46) destinés à recevoir la barrette à ressort (22) de l'écrou à ressort (20).

10. Dispositif selon la Revendication 2, ***caractérisé en ce que,*** dans la rainure en T (10), en tant que matériau plat, il est fixé une bande de matière synthétique fortement élastique, qui présente une élasticité et une épaisseur qui conviennent à une immobilisation élastique d'écrous en tant que moyens de fixation.
